**Europäisches Patentamt**

**European Patent Office**

**Office européen des brevets**

(11) Veröffentlichungsnummer: **0 151 711**
**A2**

(12) # EUROPÄISCHE PATENTANMELDUNG

(21) Anmeldenummer: **84114303.5**

(22) Anmeldetag: **27.11.84**

(51) Int. Cl.⁴: **B 60 K 17/34**

(30) Priorität: **15.12.83 DE 3345322**

(43) Veröffentlichungstag der Anmeldung:
**21.08.85 Patentblatt 85/34**

(84) Benannte Vertragsstaaten:
**FR GB IT**

(71) Anmelder: **GETRAG Getriebe- und Zahnradfabrik GmbH**
**Postfach 449 Solitudeallee 24**
**D-7140 Ludwigsburg(DE)**

(72) Erfinder: **Rühle, Günter**
**Karl-Gärttnerstrasse 21**
**D-7120 Bietigheim-Bissingen(DE)**

(74) Vertreter: **Patentanwälte Kohler - Schwindling - Späth**
**Hohentwielstrasse 41**
**D-7000 Stuttgart 1(DE)**

(54) Getriebeanordnung.

(57) Eine Getriebeanordnung, die insbesondere für Kraftfahrzeuge mit mindestens zwei angetriebenen Achsen bestimmt ist, umfaßt ein Schaltgetriebe (1) und zwei hintereinander geschaltete Ausgleichgetriebe (2, 3), von denen mindestens das Schaltgetriebe (1) als Planetengetriebe ausgebildet ist. Alle drei Getriebe (1, 2, 3) sind gleichachsig angeordnet. Besonders platzsparend ist ein Aufbau, bei dem auch die Ausgleichgetriebe (2, 3) als Planetengetriebe ausgebildet sind und das Schaltgetriebe (1) zwischen den beiden Ausgleichgetrieben (2, 3) angeordnet ist. Das Schaltgetriebe weist zwei zueinander koaxiale Hohlwellen (12, 16) auf, welche das ihm nachgeschaltete Ausgleichgetriebe (2) durchdringen, und es haben diese beiden Getriebe einen gemeinsamen Planetenradträger (21). Die beiden Ausgleichgetriebe sind dadurch gekoppelt, daß deren Hohlräder (28, 30) an einem das Schaltgetriebe (1) umgebenden, gemeinsamen Hohlkörper (29) sitzen.

Fig 1

**0151711**

Die Erfindung betrifft eine Getriebeanordnung, insbesondere
für Kraftfahrzeuge mit mindestens zwei angetriebenen Achsen,
mit zwei hintereinander geschalteten Ausgleichsgetrieben,
deren Ausgleichsgehäuse um eine gemeinsame Hauptachse drehbar gelagert sind, und einem den Ausgleichgetrieben vorgeschalteten, zweistufigen Schaltgetriebe, das als Planetengetriebe ausgebildet und um die gleiche Hauptachse wie die
beiden Ausgleichgetriebe drehbar gelagert ist, dessen Hohlrad auf einer ersten Hohlwelle sitzt, dessen Planetenradträger mit dem vom Planetenradträger gebildeten Ausgleichgehäuse des benachbarten, ebenfalls als Planetengetriebe ausgebildeten Ausgleichgetriebes verbunden ist, dessen Sonnenrad
auf einer zur ersten Hohlwelle koaxialen zweiten Hohlwelle
sitzt und dessen Schalteinrichtung die wahlweise Verbindung
eines Bestandteiles des Planetengetriebes mit einem gehäusefesten Teil oder einem anderen Bestandteil des Planetengetriebes gestattet.

Eine solche Getriebeanordnung ist aus der GB-OS 20 74 517
bekannt. Sie umfaßt zwei Ausgleichsgetriebe, von denen eines
als Planetengetriebe ausgebildet ist, und ein ebenfalls als
Planetengetriebe ausgebildetes Schaltgetriebe, das sich in
Axialrichtung neben den beiden nebeneinander angeordneten
Ausgleichsgetrieben befindet. Die zum Betätigen des Schaltgetriebes dienende Schalteinrichtung umfaßt eine axial neben dem eigentlichen Radsatz angeordnete Schaltmuffen-Anordnung.
Diese bekannte Getriebeanordnung hat eine beträchtliche
axiale Ausdehnung, die ihren Einsatz in kleineren Personenkraftwagen mit quer gestelltem Motor problematisch macht.

Aus der FR-ZS 94 265 ist eine Getriebeanordnung mit zwei
gleichachsig angeordneten Ausgleichsgetrieben bekannt, die
als Planetengetriebe ausgebildet sind. Jedoch weist die
bekannte Getriebeanordnung kein zusätzliches Schaltgetriebe
auf, sondern lediglich eine Art Differentialsperre. Diese
Sperreinrichtung ist nicht in die eigentliche Getriebeanordnung integriert, sondern in Verlängerung der gemeinsamen
Achse der beiden Planetengetriebe angeordnet, ähnlich wie
sich auch bei der Getriebeanordnung nach der GB-OS 20 74 517
das Schaltgetriebe neben den gleichachsig angeordneten
Ausgleichgetrieben befindet. Auch hier ergibt sich eine
erhebliche axiale Länge der Getriebeanordnung, die durch ein
gleichachsig angeordnetes Schaltgetriebe noch bedeutend
erhöht wurde.

Demgemäß liegt der Erfindung die Aufgabe zugrunde, eine
Getriebeanordnung der eingangs genannten Art so weiterzubilden, daß ihr Platzbedarf vermindert wird.

Diese Aufgabe wird nach der Erfindung dadurch gelöst, daß
beide Ausgleichsgetrieben als Planetengetriebe ausgebildet
sind und das Schaltgetriebe derart zwischen den beiden
Ausgleichgetrieben angeordnet ist, daß die zueinander koaxialen Hohlwellen des Schaltgetriebes das erste der beiden
Ausgleichsgetriebe durchdringen und der Planetenradträger
des Schaltgetriebes mit dem Planetenradträger des ersten
Ausgleichsgetriebes verbunden ist, während die Hohlräder der beiden Ausgleichsgetriebe an einem das Schaltgetriebe umgebenden, gemeinsamen Hohlkörper sitzen, und daß die das Sonnenrad des Schaltgetriebes tragende zweite Hohlwelle die dessen Hohlrad tragende erste Hohlwelle umgibt und axial derart verschiebbar ist, daß sie in eine erste Stellung mit einem gehäusefesten Teil und in der zweiten Stellung mit dem Planetenradträger drehfest in Eingriff steht.

Die Ausbildung aller Getriebe als Planetengetriebe sowie die Einfügung des Schaltgetriebes zwischen die beiden Ausgleichsgetriebe führt zu einem axial außerordentlich gedrängten Aufbau, der es ermöglicht, solche Getriebe extrem klein auszubilden, so daß sie auch bei kleinen Personenkraftwagen mit Allradantrieb und quergestelltem Motor ohne weiteres Anwendung finden können. Dabei ist nicht nur von besonderem Vorteil, daß durch den Einbau des Schaltgetriebes zwischen die Ausgleichsgetriebe die einzelnen Getriebeelemente extrem dicht zueinander benachbart angeordnet und teilweise sogar miteinander vereinigt werden können, sondern es wird auch die Schalteinrichtung zum Betätigen des Schaltgetriebes im wesentlichen in die Getriebeanordnung integriert und benötigt keinen nennenswerten zusätzlichen Platz.

Die erfindungsgemäße Getriebeanordnung kann ohne weiteres
mit einer Differentialsperre für eines oder beide Ausgleichgetriebe versehen werden. Insbesondere kann eine Differentialsperre für das mit dem Schaltgetriebe gekoppelte Ausgleichgetriebe vorgesehen werden, welches bei Kraftfahrzegen
dazu dient, das Drehmoment auf zwei Achsen des Fahrzeuges zu
verteilen, während das zweite Ausgleichgetriebe dazu dient,
das ihm zugeführte Drehmoment auf die einer Achse zugeordneten Antriebsräder zu verteilen.

Bei einer bevorzugten Ausführungsform der Erfindung, bei der
alle Getriebe als Planetenradgetriebe ausgebildet sind, wird
die Differentialsperre von einem verschiebbaren Koppelglied
gebildet, das in einer seiner Stellungen eine drehfeste
Verbindung zwischen dem Planetenradträger und dem Sonnenrad
des ersten Ausgleichgetriebes herstellt. Dieses Koppelglied
kann mit einem koaxial zur Hauptwelle angeordneten Kolben
verbunden sein, der eine an eine Unterdruckleitung anschließbare Kammer abschließt, so daß die Differentialsperre
einfach dadurch einrückbar ist, daß diese Kammer dem vom
Motor eines Kraftfahrzeuges erzeugten Unterdruck ausgesetzt
wird. Das Lösen der Differentialsperre kann dann einfach
dadurch erfolgen, daß der Unterdruck durch Absperren der
Leitung aufgehoben wird und dann das Koppelglied mittels

-ines zuvor gespannten Kraftspeichers, insbesondere von
Federn, in seine Ausgangslage zurückgebracht wird, in welcher die Sperrung aufgehoben ist.

Die Erfindund wird im folgenden anhand des in der Zeichnung
dargestellten Ausführungsbeispieles näher beschrieben und
erläutert. Die der Beschreibung und der Zeichnung zu entnehmenden Merkmale können bei anderen Ausführungsformen der
Erfindung einzeln für sich oder zu mehreren in beliebiger
Kombination Anwendung finden. Es zeigen

Fig. 1     die schematische Darstellung einer Getriebeanordnung nach der Erfindung und

Fig. 2     einen Längsschnitt durch eine dem Schema nach

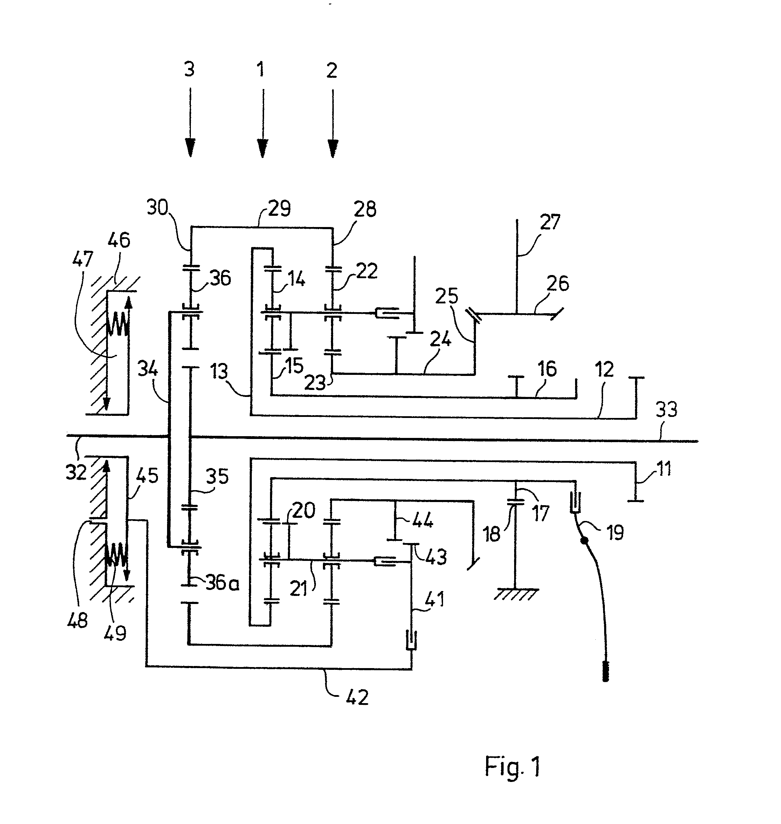

           Fig. 1 entsprechende Getriebeanordnung.

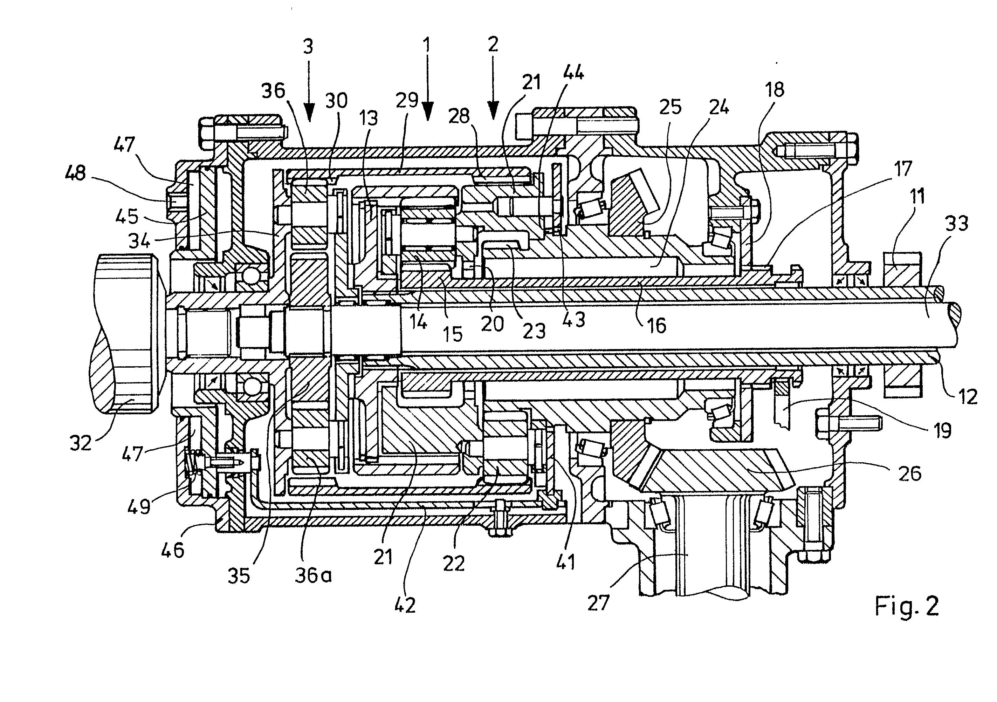

Die folgende Beschreibung bezieht sich auf die Fig. 1 und 2,
die beide das gleiche Getriebe darstellen. In der schematischen Darstellung nach Fig. 1 sind sämtliche gehäusefesten
Lagerstellen fortgelassen. Gehäuseteile sind nur insoweit
schematisch angedeutet, wie sie für die Getriebefunktion
eine Rolle spielen.

Die in der Zeichnung dargestellte Getriebeanordnung weist
drei koaxial zueinander angeordnete Planetengetriebe auf,
nämlich ein Schaltgetriebe 1 und zwei Ausgleichgetriebe 2
und 3. Die Krafteinleitung erfolgt über ein Zahnrad 11, das
an einem Ende einer ersten Hohlwelle 12 angebracht ist, die
an ihrem anderen Ende das Hohlrad 13 des Schaltgetriebes 1
trägt. Die Planetenräder 14 des Schaltgetriebes stehen in
üblicher Weise mit einem Sonnenrad 15 in Eingriff, das sich
an einem Ende einer zweiten Hohlwelle 16 befindet, welche

7

0151711

die erste Hohlwelle 12 konzentrisch umgibt. Nahe dem anderen
Ende der zweiten Hohlwelle 16 befindet sich ein Zahnrad 17,
das in der gezeigten Stellung der Hohlwelle 16 mit einer
gehäusefesten Zahnung 18 in Eingriff steht, so daß das
Sonnenrad 15 stillsteht. Die zweite Hohlwelle 16 ist axial
verschieblich gelagert und mittels einer Schaltgabel 19 aus
der gezeigten Stellung ausrückbar, wodurch die Verbindung zu
der ortsfesten Verzahnung 17 gelöst und statt dessen eine
Verbindung zu einer Zahnung 20 am Planetenradträger 21
hergestellt wird, wodurch die Planetenräder 14 mit dem
Planetenradträger 21 drehfest verbunden werden. Infolgedessen können sich die Planetenräder 14 auch nicht mehr im
Hohlrad 13 abwälzen, so daß eine starre Verbindung zwischen
dem Hohlrad 13 und dem Planetenradträger 21 hergestellt
wird, was einer Übersetzung des Schaltgetriebes von 1:1
entspricht. Ist dagegen das Sonnenrad 15 in der zuvor beschriebenen Stellung der zweiten Hohlwelle 16 drehfest
gehalten, läuft der Planetenradträger 21 mit einer geringeren Drehzahl um als das angetriebene Hohlrad 13, so daß hier
eine Untersetzung der Drehzahl erfolgt. Bei einem Kraftfahrzeug ist beispielsweise der erste Fall für Straßenbetrieb
und der andere für Geländebetrieb geeignet.

Der Planetenradträger 21 des Schaltgetriebes 1 ist zugleich
der Planetenradträger des ersten Ausgleichgetriebes 2. Die
Drehmomentübertragung vom Schaltgetriebe 1 auf das erste
Ausgleichgetriebe erfolgt also über diesen gemeinsamen
Planetenradträger 21. Die dem Ausgleichgetriebe 2 zugeordten Planetenräder 22 stehen mit einem Sonnenrad 23 in Eingriff, das sich am Ende einer dritten Hohlwelle 24 befindet,
welche die zuerst genannten Hohlwellen 12 und 16 koaxial
umgibt und an ihrem anderen Ende ein Kegelrad 25 trägt, die

Das in der Zeichnung dargestellte Ausführungsbeispiel weist
als Besonderheit noch eine Differentialsperre für das erste
Ausgleichgetriebe 2 auf, welches bei dem dargestellten
Ausführungsbeispiel zur Verteilung des Drehmomentes auf zwei
Fahrzeugachsen dient. Zu diesem Zweck ist der dem Schaltgetriebe 1 und dem ersten Ausgleichgetriebe 2 gemeinsame
Planetenradträger 21 mit einer Schaltscheibe 41 versehen,
die gegenüber dem Planetenradträger 21 mittels einer Schubstange 42 axial verschiebbar ist und eine Innenverzahnung 43
aufweist, die durch Verschieben des Schaltringes 41 mit
einem Zahnkranz 44 am Umfang der dritten Hohlwelle 24, die
das Sonnenrad 23 des ersten Ausgleichgetriebes 2 trägt, in
Eingriff bringbar ist. Dadurch wird eine starre Verbindung
zwischen den Rädern des ersten Ausgleichgetriebes hergestellt und infolgedessen die Wirkung dieses Ausgleichgetriebes aufgehoben.

Um das Einrücken der Differentialsperre zu erleichtern, ist
bei dem dargestellten Ausführungsbeispiel die Schubstange 42
mit einem Kolben 45 verbunden, der koaxial zur Hauptwelle
angeordnet ist und eine im Gehäuse 46 angeordnete Kammer 47
abschließt, die einen Anschluß 48 für eine Unterdruckleitung
aufweist. Diese Unterdruckleitung kann in üblicher Weise mit
dem Ansaugsystem des Motors eines Kraftfahrzeuges in Verbindung stehen, wie es auch bei anderen Servoeinrichtungen der
Fall ist. Wird durch Betätigen eines Schalters o.dgl. in der
Kammer 47 Unterdruck erzeugt, wird der Kolben 45 in einer
Richtung bewegt, die das Einrücken der Zahnung 43 in den
Zahnkranz 44 an der dritten Hohlwelle 24 zur Folge hat, so
daß damit die Differentialsperre eingerückt ist. Bei Aufheben des Unterdruckes in der Kammer 47 bewegen in der Kammer
angeordnete Schraubendruckfedern 49 den Kolben 45 in seine dem ein Kegelrad 26 am Ende einer Abtriebswelle 27 in Eingriff steht, die beispielsweise zu dem Ausgleichgetriebe einer anderen Achse führen kann. Das Hohlrad 28 dieses ersten Ausgleichgetriebes sitzt an der Innenseite eines zylindrischen Hohlkörpers 29, der die drei Planetengetriebe und insbesondere das zentrale Schaltgetriebe im wesentlichen umgibt und an seinem anderen Ende das Hohlrad 30 des zweiten Ausgleichgetriebes 3 trägt und dadurch das von dem ersten Ausgleichgetriebe 2 gelieferte Drehmoment auf die Planetenräder 31 des zweiten Ausgleichgetriebes 3 überträgt. Die Räder des Ausgleichgetriebes 2 können so gewählt werden, daß über das Sonnenrad 23 an die Abtriebswelle 27 und über das Hohlrad 28 an das zweite Ausgleichgetriebe 3 unterschiedlich große Drehmomente übertragen werden. Bei der in Fig. 2 dargestellten, konkreten Ausführungsform der Erfindung steht die Drehmomentverteilung zwischen dem zum Vorderachsantrieb bestimmten zweiten Ausgleichgetriebe und der zur Hinterachse führenden Abtriebswelle 27 im Verhältnis 63,6: 36,4.

Das zweite Ausgleichgetriebe 3 dient zur Übertragung der Drehmomente auf zwei Wellen 32 und 33, von denen die erste mit dem Planetenradträger 34 und die andere mit dem Sonnenrad 35 dieses Ausgleichgetriebes verbunden ist. Hier ist die Anordnung so getroffen, daß von dem Hohlrad 30 über die Planetenräder 36, 36a und den Planetenradträger 34 bzw. das Sonnenrad 35 auf beide Wellen 32 und 33 das gleiche Drehmoment übertragen wird. Wie bereits erwähnt, dienen bei dem in Fig. 2 dargestellten Ausführungsbeispiel diese beiden Wellen zum Antrieb der Vorderräder eines Kraftwagens.

Ausgangsstellung zurück, wodurch die Differentialsperre
wieder gelöst wird.

Es versteht sich, daß die Erfindung nicht auf das dargestellte Ausführungsbeispiel beschränkt ist, sondern Abweichungen davon möglich sind, ohne den Rahmen der Erfindung zu
verlassen. Insbesondere ist die Erfindung nicht darauf
beschränkt, daß alle Ausgleichgetriebe als Planetengetriebe
ausgebildet sind. Auch kann das Schaltgetriebe seitlich
neben den Ausgleichgetrieben angeordnet sein. Entsprechende
Möglichkeiten bieten die Getriebeanordnungen nach der älteren Patentanmeldung P 33 11 175.8, bei denen es möglich
wäre, die Planetenradträer des Schaltgetriebes mit dem
Ausgleichsgehäuse des ersten Ausgleichgetriebes zu verbinden.

1

## Patentansprüche

Getriebeanordnung, insbesondere für Kraftfahrzeuge mit mindestens zwei angetriebenen Achsen, mit zwei hintereinander geschalteten Ausgleichgetrieben, deren Ausgleichgehäuse um eine gemeinsame Hauptachse drehbar gelagert sind, und einem den Ausgleichgetrieben vorgeschalteten, zweistufigen Schaltgetriebe, das als Planetengetriebe ausgebildet und um die gleiche Hauptachse wie die beiden Ausgleichgetriebe drehbar gelagert ist, dessen Hohlrad auf einer ersten Hohlwelle sitzt, dessen Planetenradträger mit dem vom Planetenradträger gebildeten Ausgleichgehäuse des benachbarten, ebenfalls als Planetengetriebe ausgebildeten Ausgleichgetriebes verbunden ist, dessen Sonnenrad auf einer zur ersten Hohlwelle koaxialen zweiten Hohlwelle sitzt und dessen Schalteinrichtungen die wahlweise Verbindung eines Bestandteiles des Planetengetriebes mit einem gehäusefesten Teil oder einem anderen Bestandteil des Planetengetriebes gestattet, dadurch gekennzeichnet, daß beide Ausgleichgetriebe (2, 3) als Planetengetriebe ausgebildet sind und das Schaltgetriebe (1) derart zwischen den beiden Ausgleichgetrieben angeordnet ist, daß die zueinander koaxialen Hohlwellen (12, 16) des Schaltgetriebes (1) das erste der beiden Ausgleichgetriebe (2) durchdringen und der Planetenradträger (21) des Schaltgetriebes (1) mit dem Planetenradträger (21) des ersten Ausgleichgetriebes (2) verbunden ist, während die Hohlräder (28, 30) der beiden Ausgleichgetriebe (2, 3) an einem das Schaltgetriebe (1) umgebenden, gemeinsamen Hohlkörper (29) sitzen, und daß die das Sonnenrad (15) des Schaltgetriebes (1) tragende zweite Hohlwelle (16) die dessen Hohlrad (13) tragende erste Hohlwelle (16) umgibt und axial derart verschiebbar ist, daß sie in einer ersten Stellung mit einem gehäusefesten Teil (18) und in der zweiten Stellung mit dem Planetenradträger (21) drehfest in Eingriff steht.

2. Getriebeanordnung nach Anspruch 1, dadurch gekennzeichnet, daß die Planetenradträger (21) des Schaltgetriebes (1) und des ersten Ausgleichgetriebes (2) von einem gemeinsamen Bauteil gebildet werden.

3. Getriebeanordnung nach einem der vorhergehenden Ansprüche, dadurch gekennzeichnet, daß das mit dem Schaltgetriebe (1) gekoppelte Ausgleichgetriebe (2) mit einer Differentialsperre (43, 44) versehen ist.

4. Getriebeanordnung nach den Anspruch 3, dadurch gekennzeichnet, daß die Differentialsperre an einem verschiebbaren Koppelglied (41) gebildet wird, das in einer seiner Stellungen eine drehfeste Verbindung zwischen dem Planetenradträger (21) und dem Sonnenrad (23) des ersten Ausgleichgetriebes (2) herstellt.

5. Getriebeanordnung nach Anspruch 4, dadurch gekennzeichnet, daß das verschiebbare Koppelglied (41) mit einem koaxial zur Hauptwelle angeordneten Kolben (45) verbunden ist, der eine an eine Unterdruckleitung anschließbare Kammer (47) abschließt.

Fig. 1

Fig. 2

0151711